# EUROPEAN PATENT APPLICATION

(11) **EP 4 013 127 A1**
(43) Date of publication of application: **15.06.2022**
(21) Application number: 19941317.0
(22) Date of filing: 09.08.2019
(51) Int. Cl.: H04W 36/36, H04W 92/20

(54) **WIRELESS COMMUNICATION NODE**

(71) Applicant: NTT DOCOMO, INC., Chiyoda-Ku Tokyo 100-6150 (JP)
(72) Inventor: MURATA Naoya, Tokyo 100-6150 (JP); HANAKI Akihito, Tokyo 100-6150 (JP); UCHINO Tooru, Tokyo 100-6150 (JP)
(74) Representative: Hoffmann Eitle
(86) International application number: PCT/JP2019/031767
(87) International publication number: WO 2021/028998

(57) **Abstract**

A radio communication node (gNB 100A) configures a transition destination cell according to a conditional cell transition for a terminal (UE 200) that is visiting a cell that forms the radio communication node, and transmits a transition request of the terminal to a transition destination radio communication node (gNB 100C) that forms the configured transition destination cell.

## Description

### TECHNICAL FIELD

The present invention relates to a radio communication node capable of performing radio communication with a terminal that is capable of performing cell transition without waiting for a transition command.

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). In the 3GPP, specifications for 5th generation mobile communication system (5G, also called as New Radio (NR) or Next Generation (NG)) are also being considered.

For example, in the conventional handover (HO) procedure, a network, specifically, a radio communication node of a radio base station and the like determines a target radio base station (also referred to as target cell) based on quality information such as a measurement report (Measurement Report) transmitted from a terminal (User Equipment, UE), and transmits a handover command (transition command) after the preparation of handover is completed.

However, if a point for an appropriate handover passes over during the handover preparation on the network side, the terminal transitions to the target radio base station without receiving the handover command from a source radio base station (also referred to as source cell), resulting in momentary loss of a radio link.

Accordingly, to address this problem, a procedure called Conditional HO (conditional cell transition) is being examined (See Non-Patent Document 1). In the Conditional HO, a candidate cell for the handover and a condition for transitioning to the candidate cell are configured beforehand for the terminal.

Accordingly, the terminal can transition to the target radio base station without having to wait for the handover command from the network.

### PRIOR ART DOCUMENT

### NON-PATENT DOCUMENT

Non-Patent Document 1: "Running CR for the introduction of NR mobility enhancement", R2-1906284, 3GPP TSG-RAN WG2 Meeting #106, 3GPP, May 2019

### SUMMARY OF THE INVENTION

When many terminals that are in connected state in a radio resource layer (RRC) are migrating sequentially across many cells (for example, terminals carried by users in moving train and the like), many handovers are performed simultaneously each time the terminals migrate to a different cell. In such a case, signaling amount of the control plane increases causing throughput deterioration and the like.

On the other hand, even when Conditional HO is applied, each time the terminals migrate to a different cell, a candidate cell is configured for each terminal, resulting in similar increase in signaling amount of the control plane.

The present invention has been made in view of the above discussion. One object of the present invention is to provide a radio communication node that is capable of suppressing throughput deterioration and the like even when a conditional cell transition such as Conditional HO is applied and a plurality of terminals is simultaneously migrating to a new cell.

According to one aspect of the present disclosure a radio communication node (e.g., gNB 100A) includes a controlling unit (transition control unit 150) that configures a transition destination cell according to a conditional cell transition for a terminal (UE 200) that is visiting a cell that forms the radio communication node, and a transmitting unit (transition request processing unit 130) that transmits a transition request of the terminal to a transition destination radio communication node that forms the configured transition destination cell.

According to another aspect of the present disclosure a radio communication node (e.g., gNB 100A) includes a receiving unit (setup request processing unit 140) that receives a setup request for a conditional cell transition from a visited radio communication node that forms a cell to which a terminal (UE 200) is visiting, and a transmitting unit (transition request processing unit 130) that transmits in accordance with the setup request a transition request of the terminal to a transition destination radio communication node that forms a transition destination cell according to the conditional cell transition.

According to still another aspect of the present disclosure a radio communication node (e.g., gNB 100A) includes a receiving unit (setup request processing unit 140) that receives a setup request transmitted by another radio communication node that received the setup request for a conditional cell transition from a visited radio communication node that forms a cell to which a terminal (UE 200) is visiting, and a transmitting unit (transition request processing unit 130) that transmits in accordance with the setup request a transition request of the terminal to a transition destination radio communication node that forms a transition destination cell according to the conditional cell transition.

### BRIEF DESCRIPTION OF DRAWINGS

FIG. 1 is an overall schematic configuration diagram of a radio communication system 10.
FIG. 2 is a diagram showing functional block configuration of gNB 100A.
FIG. 3 is a diagram explaining a conventional handover procedure.
FIG. 4 is a diagram explaining a handover procedure according to Conditional HO.
FIG. 5 is a diagram showing a basic sequence of the Conditional HO.
FIG. 6 is a diagram explaining a relation between a migration state of UE 200 and starting of the Conditional HO.
FIG. 7 is a diagram showing Pre-setup Patterns 1 and 2 of setting information of the Conditional HO (transition destination cell).
FIG. 8 is a diagram showing Pre-setup Pattern 3 of the setting information of the Conditional HO (transition destination cell).
FIG. 9 is a diagram showing Pre-setup Patterns 1 and 2 of setting information of Conditional SCG Connection.
FIG. 10 is a diagram showing Pre-setup Pattern 3 of the setting information of the Conditional SCG Connection.
FIG. 11 is a diagram showing an example of hardware configuration of the gNB 100A, gNB 100B, and gNB 100C.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

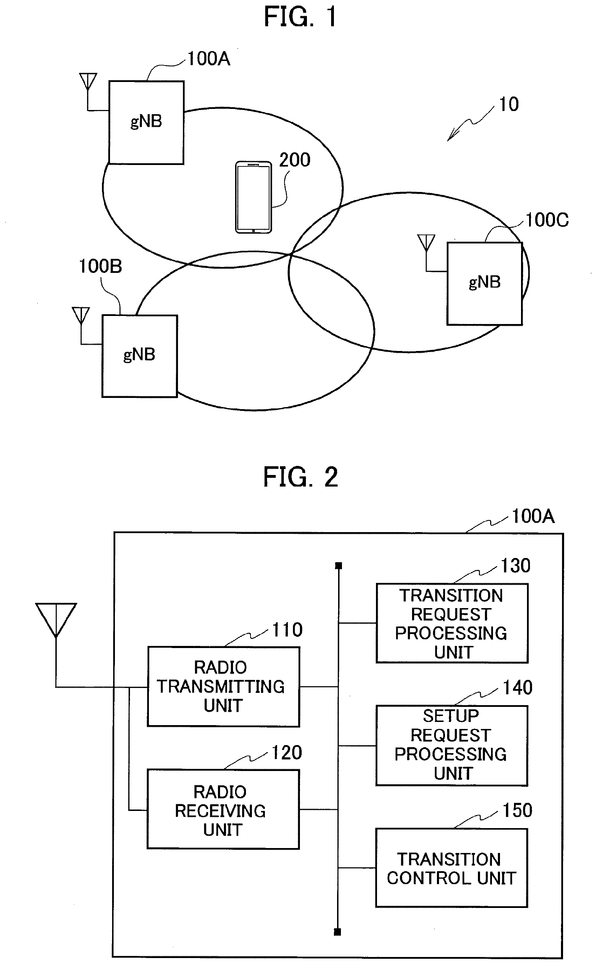

FIG. 1 is an overall schematic configuration diagram of a radio communication system 10 according to the present embodiment. The radio communication system 10 is a radio communication system according to 5G New Radio (NR). The radio communication system 10 includes not-shown Next Generation-Radio Access Network (NG-RAN and user terminal 200 (User Equipment 200, hereinafter, "UE 200").

The NG-RAN includes a radio base station 100A (hereinafter, "gNB 100A"), a radio base station 100B (hereinafter, "gNB 100B"), and a radio base station 100C (hereinafter, "gNB 100C"). A concrete configuration of the radio communication system 10, including the number of the gNBs and the UEs, is not limited to the example shown in FIG. 1.

The NG-RAN actually includes a plurality of NG-RAN Nodes, in particular, the gNBs (or ng-eNB) . Also, the NG-RAN is connected to a core network (5GC, not shown) according to the 5G. The NG-RAN and the 5GC may be simply expressed as "network".

The gNB 100A, the gNB 100B, and the gNB 100C are radio base stations according to the 5G and perform radio communication with the UE 200 according to the 5G. In the present invention, the gNB 100A, the gNB 100B, and the gNB 100C can constitute radio communication nodes.

The gNBs 100A to 100C and the UE 200 can handle, by controlling a radio signal transmitted from a plurality of antenna elements, Massive MIMO that generates a beam with a higher directivity, carrier aggregation (CA) that bundles a plurality of component carriers (CC) to use, dual connectivity (DC) in which communication is performed simultaneously between each of a plurality of NG-RAN Nodes and the UE, and the like.

The gNB 100A, the gNB 100B, and the gNB 100C form one cell each or a plurality of cells. The UE 200 can transition between the cells formed by the gNB 100A, the gNB 100B, and the gNB 100C (can be referred to as radio base stations) . The term "transition" typically refers to a handover between cells (radio base stations) but can include behavior of the UE 200 for changing a connection destination cell such as cell reselection.

A transition destination cell to which the UE 200 transitions is called a target cell or a target radio base station. Moreover, a transition source cell (radio base station) is called a source cell or a source radio base station.

In the radio communication system 10, the UE 200 can perform a handover (cell transition) according to the conditional handover (Conditional HO) without waiting for the handover command (transition command).

### (2) Functional Block Configuration of Radio Communication System

Next, a functional block configuration of the radio communication system 10 will be explained. Specifically, the functional block configuration of the gNB 100A will be explained. Note that the gNB 100B and the gNB 100C have the same configuration as that of the gNB 100A.

FIG. 2 is a diagram showing the functional block configuration of the gNB 100A. As shown in FIG. 2, the gNB 100A includes a radio transmitting unit 110, a radio receiving unit 120, a transition request processing unit 130, a setup request processing unit 140, and a transition control unit 150.

The radio transmitting unit 110 transmits a downlink signal (DL signal) according the NR. The radio receiving unit 120 receives an uplink signal (UL signal) according to the NR.

Specifically, the radio transmitting unit 110 and the radio receiving unit 120 perform radio communication via a control channel or a data channel.

The control channel includes PDCCH (Physical Downlink Control Channel), PUCCH (Physical Uplink Control Channel), PRACH (Physical Random Access Channel), and Physical Broadcast Channel (PBCH), and the like.

The data channel includes PDSCH (Physical Downlink Shared Channel), PUSCH (Physical Downlink Shared Channel), and the like.

The transition request processing unit 130 executes processing relating to transition of the UE 200 to another cell (handover). Particularly, the transition request processing unit 130 executes processing relating to the conditional transition of the UE 200 between the cells (conditional cell transition).

Specifically, the transition request processing unit 130 transmits a transition request of the UE 200 to a transition destination radio communication node that forms a transition destination cell configured based on the Conditional HO (hereinafter appropriately abbreviated as CHO). In the present invention, the transition request processing unit 130 constitutes a transmitting unit that transmits the transition request.

Specifically, the transition request processing unit 130 can transmit HO request to the transition destination radio communication node. Moreover, the transition request processing unit 130 can receive acknowledge, which is a positive acknowledgement for the HO request from the transition destination radio communication node.

Moreover, the transition request processing unit 130 can transmit the HO request (transition request) of the UE 200 to the transition destination radio communication node that forms the transition destination cell according to the Conditional HO, in accordance with +CHO pre-setup request received by the setup request processing unit 140.

The setup request processing unit 140 executes processing relating to a setup request of the Conditional HO. Specifically, the setup request processing unit 140 can receive the +CHO pre-setup request from a visited radio communication node that forms a cell that the UE 200 is visiting. Via the +CHO pre-setup request, the gNB 100A is requested to pre-setup the Conditional HO of the UE 200. In the present embodiment, the setup request processing unit 140 constitutes a receiving unit that receives the setup request.

Moreover, the setup request processing unit 140 can receive the +CHO pre-setup request from another radio communication node that received the +CHO pre-setup request. The another radio base station that received the +CHO pre-setup request transmits the received the +CHO pre-setup request to the gNB 100A as a response to receiving the +CHO pre-setup request from the visited radio communication node that forms the cell that the UE 200 is visiting.

The transition control unit 150 performs control relating to the transition of the UE 200. Particularly, in the present embodiment, the transition control unit 150 configures a transition destination cell according to the Conditional HO for the UE 200 that is visiting a cell formed by the gNB 100A (radio communication node). In the present embodiment, the transition control unit 150 constitutes a controlling unit that configures a transition destination cell according to the conditional cell transition.

Specifically, the transition control unit 150 configures for the UE 200 a candidate cell for the Conditional HO, a condition for transitioning to the candidate cell, and the like.

### (3) Operation of Radio Communication System

Operation of the radio communication system 10 will be explained below. Specifically, after explaining the operation of the Conditional HO, pre-setup operation of the setting information of the Conditional HO (transition destination cell) will be explained.

### (3.1) Conditional HO

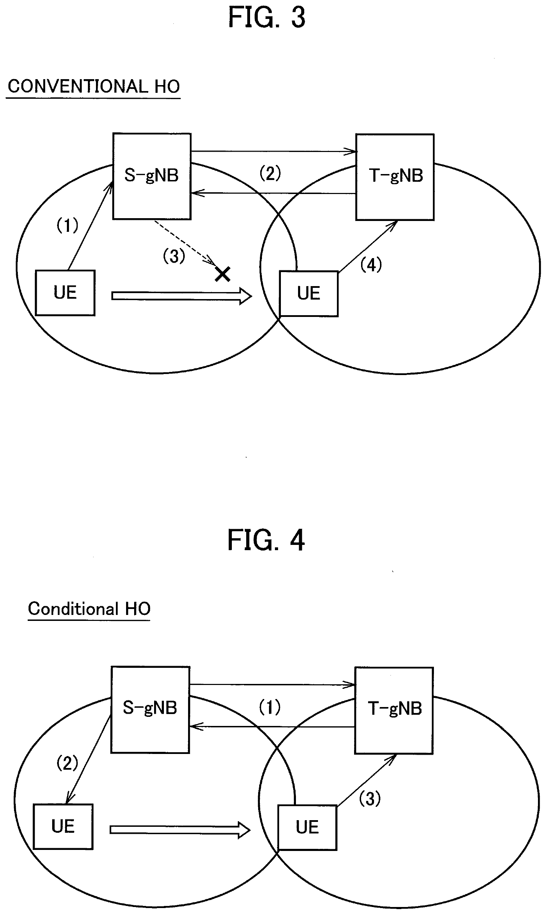

FIG. 3 is a diagram explaining the conventional handover procedure, and FIG. 4 is a diagram explaining a handover procedure according to the Conditional HO.

As shown in FIG. 3, in the conventional handover procedure, a network (gNB) determines a target radio base station (T-gNB) based on quality information ((1) in the figure) such as measurement report (Measurement Report) transmitted from a terminal (User Equipment, UE), and transmits ((3) in the figure) the handover command to the terminal after the handover preparation ((2) in the figure) is completed.

However, if a point for an appropriate handover passes over during the handover preparation on the network side, the terminal transitions ((4) in the figure) to the target radio base station without receiving the handover command from a source radio base station (S-gNB) (also referred to as "too late HO"). Consequently, the terminal cannot recognize the settings relating to the target radio base station, resulting in momentary loss of a radio link.

To address this problem, a procedure called Conditional HO (CHO) is being examined. In the CHO, a candidate cell for the handover and a condition for transitioning to the candidate cell and the like are set beforehand. Accordingly, the terminal can connect to the target radio base station without waiting for an instruction (handover command) from the network and avoid momentary loss of the radio link.

Specifically, as shown in FIG. 4, the preparation of the handover between the source radio base station (S-gNB) and the target radio base station (T-gNB) is performed beforehand ((1) in the figure), and the terminal is notified ((2) in the figure) of setting content of the CHO that includes the condition for transitioning to the target radio base station and the like. Upon determining to connect to the target radio base station by migrating and the like, the terminal starts ((3) in the figure) RA procedure with the target radio base station based on the setting content of the CHO.

Furthermore, the "handover command" can be referred to as reconfigurationWithSync in the NR and can be referred to as RRC connection reconfiguration (including mobilitycontrolinfo) in the LTE.

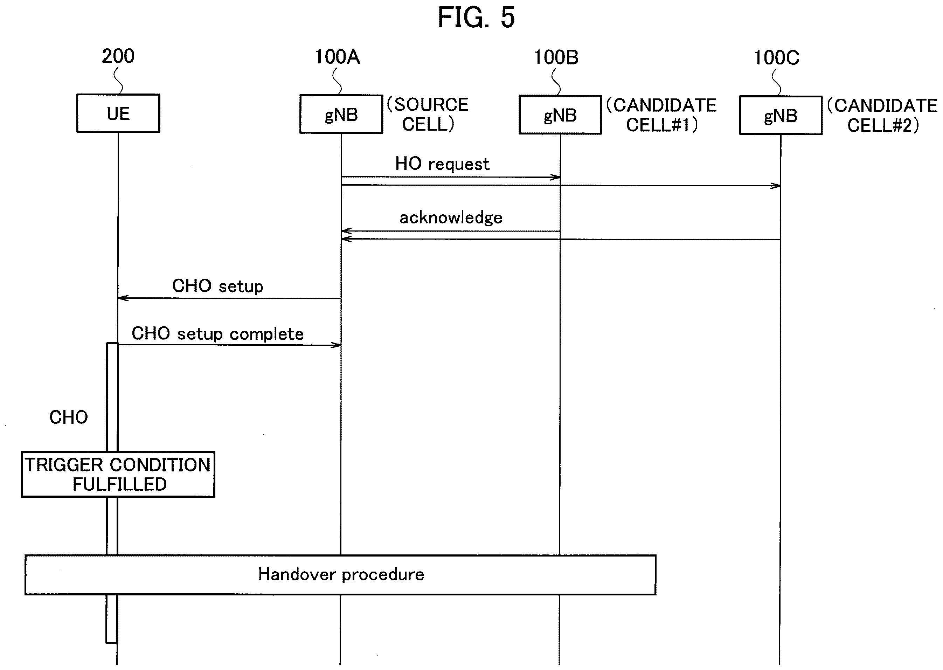

A basic sequence of the Conditional HO is shown in FIG. 5. As shown in FIG. 5, the gNB 100A (source cell) transmits the HO request to the gNB 100B and the gNB 100C, which are the candidate cells for transition destination cells according to the CHO. The gNB 100B and the gNB 100C (candidate cells) return acknowledge, which is an acknowledgment for the received HO request. With such a processing, the gNB 100B and the gNB 100C are configured as the candidate cells according to the CHO of the UE 200.

Once the setting of the candidate cell is completed, the gNB 100A transmits CHO setup to the UE 200. The UE 200 performs the setting of the CHO based on CHO setup, and returns CHO setup complete to the gNB 100A after the setting is completed.

Next, when the CHO to the candidate cell becomes possible and a trigger condition for the CHO is fulfilled, the UE 200 performs the handover procedure to the candidate cell according to the CHO.

### (3.2) Pre-setup of setting information of Conditional HO (Transition Destination Cell)

Next, operation via which the setting information of the Conditional HO (transition destination cell) is pre-setup for a radio communication node (gNB) that forms a transition destination cell of the UE 200 will be explained.

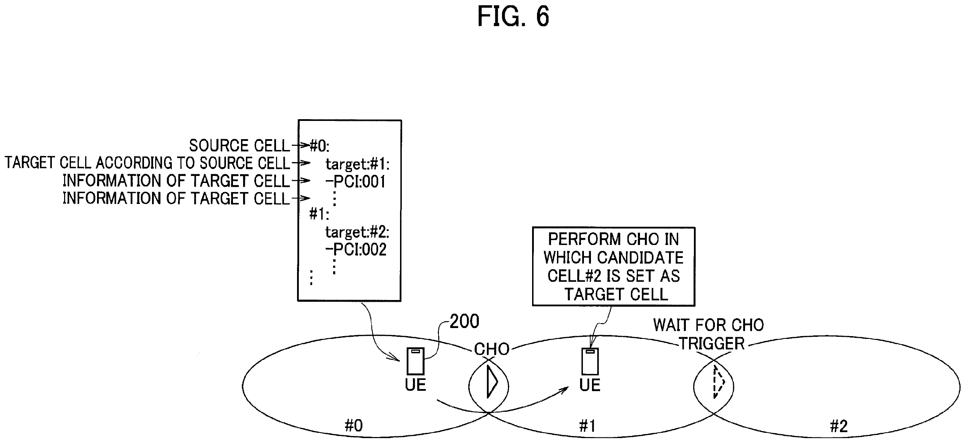

FIG. 6 is a diagram explaining a relation between the migration state of the UE 200 and starting of the Conditional HO. As shown in FIG. 6, the UE 200 migrates sequentially from cell#0 (visiting cell) to cell#1 and then to cell#2 (candidate cells for CHO) .

Furthermore, it can be assumed that the UE 200 is being carried by a user traveling in a vehicle such as a train, and a movement route, that is, migration route of the UE 200 (from cell#0 to cell#1 to cell#2) can be a known route.

As shown in FIG. 6, the CHO in which cell#1 is set as a target cell is configured for the UE 200 that is visiting cell#0 (source cell).

Then, the UE 200 migrates from cell#0 to cell#1. At this stage, because the CHO is configured, the UE 200 can perform the CHO, instead of an ordinary handover.

In the present operation example, when the UE 200 migrates to cell#1, the CHO in which cell#2 is set as the target cell can be performed. In other words, the UE 200 need not configure a radio communication node (gNB) that forms cell#1 and CHO in which cell#2 is set as the candidate cell. To support such an operation of the UE 200, setting information of the Conditional HO (transition destination cell) is configured beforehand between the radio communication nodes that form the cells before the operation of the UE 200 is performed. Patterns of such pre-setup are explained below.

### (3.2.1) Pre-setup Pattern 1

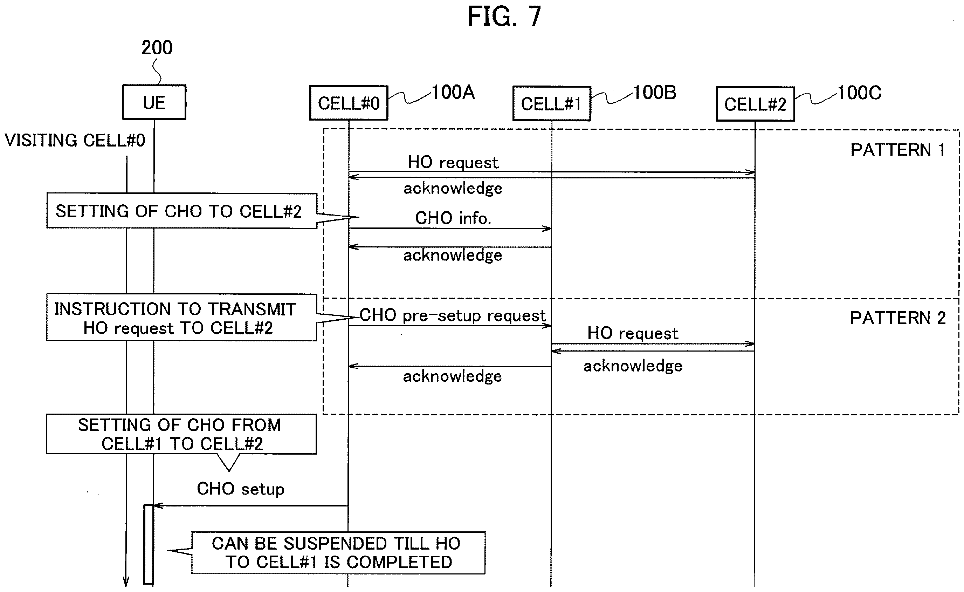

In FIG. 7, Pre-setup Patterns 1 and 2 of the setting information of the Conditional HO (transition destination cell) are shown. In the following explanation, the gNB 100A, the gNB 100B, and gNB 100C form cell#0, cell#1, and cell#2, respectively. The gNB 100B or the gNB 100C forms a cell that the UE 200 is not visiting, and the CHO in which a cell to which the UE 200 is not visiting (cell#1 or cell#2) is substantially set as the source cell is configured.

As shown in FIG. 7, the gNB 100A transmits the HO request to the gNB 100C that forms the cell#2. As explained above, cell#2 is a cell that can potentially be a candidate cell for the CHO of the UE 200. Accordingly, the gNB 100C recognizes that cell#2 is the candidate cell for the CHO of the UE 200. The gNB 100C returns acknowledge as a response to the received HO request.

Subsequently, by transmitting CHO info. to the gNB 100B, the gNB 100A requests configuration of the CHO in which cell#1 is set as the source cell. The gNB 100B returns acknowledge as an acknowledgement for the CHO info.

Furthermore, after the pre-setup (setup) of the CHO is completed, the CHO can be controlled to be in a suspended state till the UE 200 transitions to cell#1. When controlled to be suspended, the CHO can be restarted in accordance with the contention process of the CHO.

### (3.2.2) Pre-setup Pattern 2

As shown in FIG. 7, the gNB 100A transmits the +CHO pre-setup request to the gNB 100B that forms cell#1. Upon receiving the +CHO pre-setup request, the gNB 100B transmits the HO request to the gNB 100C that forms cell#2. Accordingly, similar to Pre-setup Pattern 1, the gNB 100C recognizes that cell#2 is the candidate cell for CHO of the UE 200.

The gNB 100C returns acknowledge as a response to the received HO request. The gNB 100B returns acknowledge as an acknowledgement of the +CHO pre-setup request based on the reception of acknowledge in response to the HO request from the gNB 100C.

### (3.2.3) Pre-setup Pattern 3

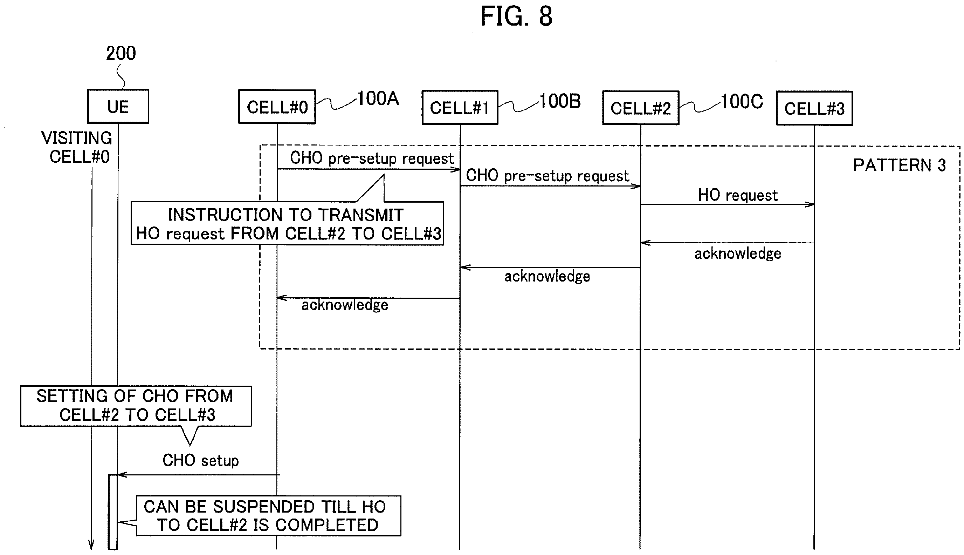

Pre-setup Pattern 3 of the setting information of the Conditional HO (transition destination cell) is shown in FIG. 8. As shown in FIG. 8, the gNB 100A transmits the +CHO pre-setup request to the gNB 100B that forms cell#1. The +CHO pre-setup request refers to an instruction to transmit the HO request from cell#2 to cell#3. cell#3 is formed by gNB that is other than the gNB 100A, the gNB 100B, and the gNB 100C.

The gNB 100B forwards (relays) the +CHO pre-setup request to the gNB 100C that forms cell#2 in accordance with the +CHO pre-setup request transmitted by the gNB 100A.

The gNB 100C transmits the HO request to a not-shown gNB that forms cell#3 in accordance with the +CHO pre-setup request transmitted by the gNB 100B. The gNB that forms cell#3 recognizes that cell#3 is the candidate cell for the CHO of the UE 200.

The gNB that forms cell#3 returns the acknowledge as a response to the received HO request to the gNB 100C. Then, the gNB 100C and the gNB 100B return acknowledge in sequence.

### (4) Effects and Advantages

The following operational effects can be obtained according to the embodiments explained above. Specifically, the setting information of the Conditional HO (transition destination cell) is configured beforehand in a radio communication node (gNB) that forms a transition destination cell of the UE 200.

More specifically, the HO request (transition request) of the UE 200 is transmitted to gNB (transition destination radio communication node) that forms the transition destination cell configured according to the Conditional HO (CHO).

Therefore, instead of configuring the CHO with the UE 200, the transition destination radio communication node can configure the CHO for the UE 200 beforehand. Accordingly, even when the plurality of the UEs such as a plurality of UEs (terminals) carried by users traveling in a vehicle such as a train migrates from one cell to another cell simultaneously, temporary increase in the signaling amount in the control plane can be prevented.

In other words, according to the radio communication system 10, throughput deterioration and the like can be suppressed, even when the CHO is applied and the plurality of the terminals is migrating to a cell simultaneously.

As explained above, when the plurality of terminals that is in connected state in RRC migrates sequentially across a plurality of the cells, a plurality of the handovers is performed simultaneously, causing throughput deterioration and the like due to increase in signaling amount in the control plane; however, according to the present embodiment, this can be avoided.

Moreover, in the present embodiment, the gNB that receives the +CHO pre-setup request (setup request) from a visited radio communication node that the UE 200 is visiting can transmit the HO request of the UE 200 to the transition destination radio communication node that forms a transition destination cell according to the CHO, in accordance with the +CHO pre-setup request.

Moreover, the gNB that received the +CHO pre-setup request transmitted by another radio communication node (gNB) that received the +CHO pre-setup request from the visited radio communication node can also transmit the transition request of the UE 200 to the transition destination radio communication node that forms the transition destination cell according to the CHO.

Consequently, an appropriate configuration of the CHO beforehand becomes possible, and throughput deterioration and the like can be suppressed further effectively even when the plurality of the terminals is migrating a cell simultaneously.

### (5) Modifications

In the operation examples explained above, pre-setup operation of the setting information of the Conditional HO (transition destination cell) is explained. However, the same operation can be applied even in Conditional SCG Connection (CSC) . In the CSC, similar to the CHO, a transition destination candidate cell and a condition for transitioning to the candidate cell can be configured beforehand for the terminal.

Furthermore, the Conditional SCG Connection is explained, for example, in 3GPP Contribution R2-1903677 (3GPP TSG-RAN WG2 #105bis, Xi'an, China, April 8-12, 2019). The Conditional SCG Connection can also be referred to as Conditional PSCell addition and the like.

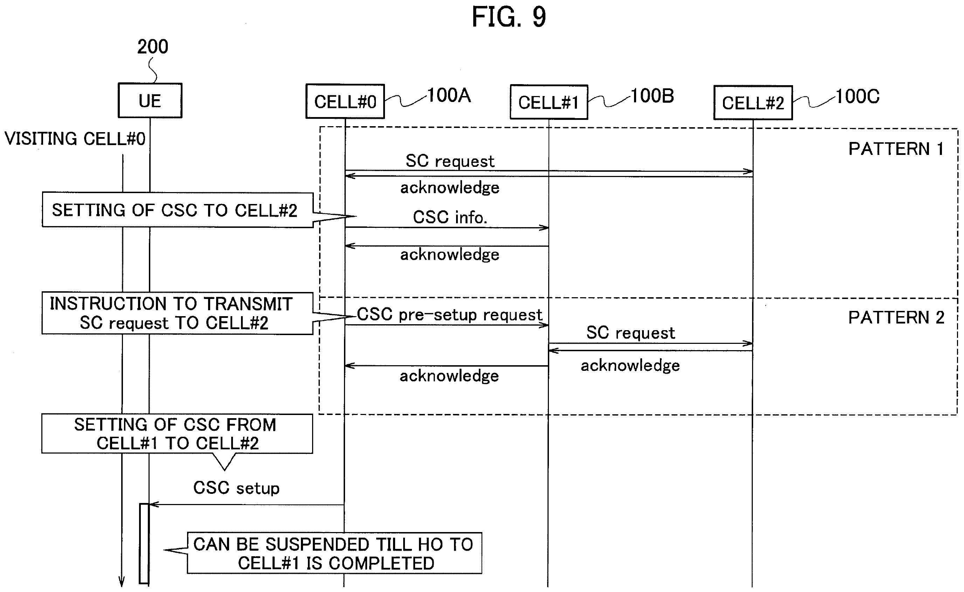

FIG. 9 shows Pre-setup Patterns 1 and 2 of setting information of the Conditional SCG Connection. FIG. 9 corresponds to Pre-setup Patterns 1 and 2 of the setting information of the Conditional HO (transition destination cell) shown in FIG. 7. Processes that differ from that of the Conditional HO are mainly explained below.

### (5.1) Pre-setup Pattern 1

As shown in FIG. 9, the gNB 100A transmits SCG Connection request (SC request) to the gNB 100C that forms cell#2. Accordingly, the gNB 100C can recognize that cell#2 is the candidate cell for the CSC of the UE 200.

Moreover, the gNB 100A requests configuration of the CSC in which cell#1 is set as the source cell by transmitting CSC info. to the gNB 100B.

As shown in FIG. 9, the gNB 100A transmits the +CHO pre-setup request to the gNB 100B that forms cell#1.

### (5.2) Pre-setup Pattern 2

As shown in FIG. 9, the gNB 100A transmits CSC pre-setup request to the gNB 100B that forms cell#1. Upon receiving CSC pre-setup request, the gNB 100B transmits SC request to the gNB 100C that forms cell#2.

### (5.3) Pre-setup Pattern 3

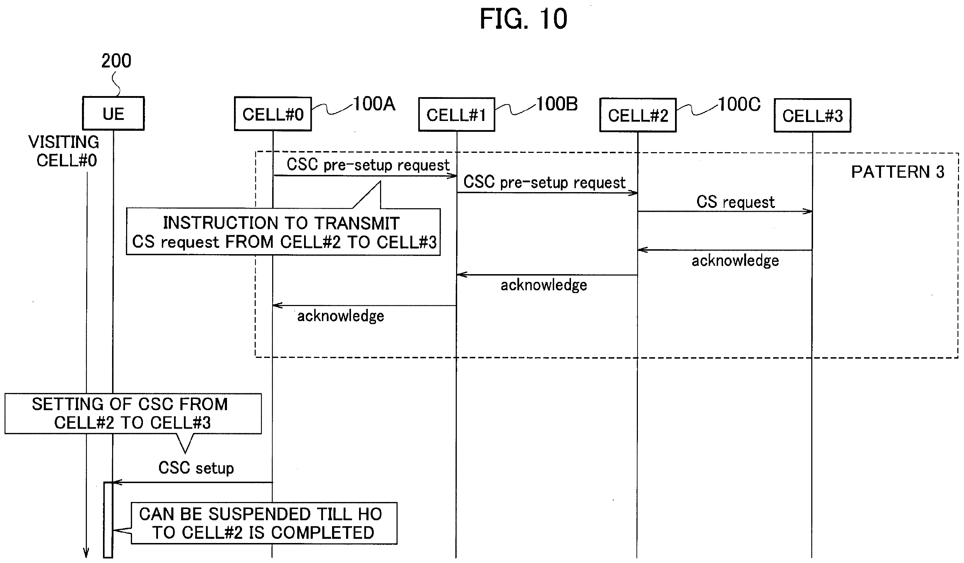

FIG. 10 shows Pre-setup Pattern 3 of the setting information of the Conditional SCG Connection. FIG. 10 corresponds to Pre-setup Pattern 3 of the setting information of the Conditional HO (transition destination cell) shown in FIG. 8.

The gNB 100B forwards (relays) CSC pre-setup request to the gNB 100C that forms cell#2 in accordance with CSC pre-setup request transmitted by the gNB 100A.

The gNB 100C transmits SC request to a not-shown gNB that forms cell#3 in accordance with CSC pre-setup request transmitted by the gNB 100B. The gNB that forms cell#3 recognizes that cell#3 is the candidate cell for the CSC of the UE 200.

### (6) Other Embodiments

Although the contents of the present invention have been described by way of the embodiments, it is obvious to those skilled in the art that the present invention is not limited to what is written here and that various modifications and improvements thereof are possible.

For example, in the embodiments explained above, 5G (NR) is cited as an example; however, the Conditional HO and the Conditional SCG Connection can be applied to the LTE as well.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

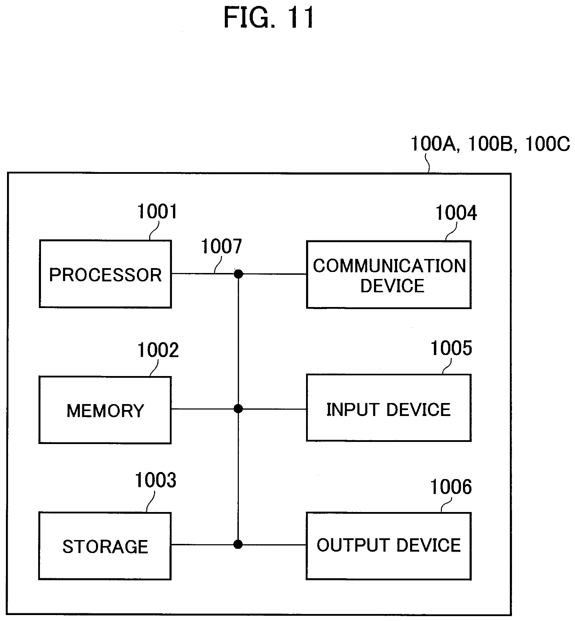

Furthermore, the gNBs 100A to 100C explained above can function as a computer that performs the processing of the radio communication method of the present disclosure. FIG. 11 is a diagram showing an example of a hardware configuration of the gNBs 100A to 100C. As shown in FIG. 11, the gNBs 100A to 100C can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the gNBs 100A to 100C (see FIG. 2) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the gNBs 100A to 100C by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto) . In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer) . It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. Aminislot may also be called a subslot. Aminislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the numerology. The number of subcarriers included in the RB may be determined based on the numerology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB : PRB), a subcarrier group (Sub-Carrier Group : SCG), a resource element group (Resource Element Group : REG), PRB pair, RB pair, etc.

A resource block may be configured by one or a plurality of resource elements (Resource Element : RE). For example, one RE may be a radio resource area of one subcarrier and one symbol.

A bandwidth part (BWP) (which may be called a partial bandwidth, etc.) may represent a subset of contiguous common resource blocks (RBs) for a certain numerology in a certain carrier. Here, a common RB may be specified by RB index based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access" . In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements . Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 100A to 100: CgNB
- 110: Radio transmitting unit
- 120: Radio receiving unit
- 130: Transition request processing unit
- 140: Setup request processing unit
- 150: Transition control unit
- 200: UE
- 1001: Processor
- 1002: Memory
- 1003: Storage
- 1004: Communication device
- 1005: Input device
- 1006: Output device
- 1007: Bus

## Claims

1. A radio communication node comprising:
a controlling unit that configures a transition destination cell according to a conditional cell transition for a terminal that is visiting a cell that forms the radio communication node, and
a transmitting unit that transmits a transition request of the terminal to a transition destination radio communication node that forms the configured transition destination cell.

2. A radio communication node comprising:
a receiving unit that receives a setup request for a conditional cell transition from a visited radio communication node that forms a cell to which a terminal is visiting, and
a transmitting unit that transmits in accordance with the setup request a transition request of the terminal to a transition destination radio communication node that forms a transition destination cell according to the conditional cell transition.

3. A radio communication node comprising:
a receiving unit that receives a setup request transmitted by another radio communication node that received the setup request for a conditional cell transition from a visited radio communication node that forms a cell to which a terminal is visiting, and
a transmitting unit that transmits in accordance with the setup request a transition request of the terminal to a transition destination radio communication node that forms a transition destination cell according to the conditional cell transition.
